# EUROPÄISCHE PATENTSCHRIFT

(11) **EP 1 288 176 B1**
(45) Veröffentlichungstag und Bekanntmachung des Hinweises auf die Patenterteilung: **13.07.2005**
(21) Anmeldenummer: 01120979.8
(22) Anmeldetag: 31.08.2001
(51) Int. Cl.: C04B 28/02, C04B 16/06

(54) **Gegen Brandeinwirkung geschütztes Bauteil aus Beton**
Fire resistant concrete constructural element
Element de construction en béton résistant au feu

(43) Veröffentlichungstag der Anmeldung: 05.03.2003
(73) Patentinhaber: Hochtief Aktiengesellschaft, 45128 Essen (DE)
(72) Erfinder: Dahl, Johannes, 44225 Dortmund (DE); Schaab, Andreas, 63776 Mömbris-Daxberg (DE)
(74) Vertreter: Rohmann, Michael, Dr.

(56) Entgegenhaltungen:
- EP-A- 1 156 022
- DE-A- 4 220 274
- FR-A- 2 804 952
- DATABASE WPI Section Ch, Week 198908 Derwent Publications Ltd., London, GB; Class L02, AN 1989-059523 XP002187703 & SE 8 701 395 A (AB INST INNOVATIONS), 4. Oktober 1988 (1988-10-04)
- DATABASE WPI Section Ch, Week 198435 Derwent Publications Ltd., London, GB; Class A93, AN 1984-217045 XP002187704 & JP 59 128245 A (KUBOTA LTD), 24. Juli 1984 (1984-07-24)
- DATABASE WPI Section Ch, Week 200024 Derwent Publications Ltd., London, GB; Class A17, AN 2000-272038 XP002187705 & CN 1 242 345 A (INST CHEM CHINESE ACAD SCI), 26. Januar 2000 (2000-01-26)

## Beschreibung

Die Erfindung betrifft ein gegen Brandeinwirkung geschütztes Bauteil aus Beton, insbesondere einen Tübbing aus Beton für den Tunnelausbau.

Aus der Praxis bekannte Bauteile bzw. Bauwerke aus Beton weisen in der Regel den beachtlichen Nachteil auf, dass sie gegenüber einer Brandeinwirkung bzw. gegenüber den im Brandfall entstehenden hohen Temperaturen nicht ausreichend resistent sind. Bei diesen hohen Temperaturen kommt es bei den bekannten Bauteilen bzw. Bauwerken zu Abplatzungen von Betonteilen, die die Stabilität und Tragfähigkeit des Bauteils bzw. Bauwerks beachtlich beeinträchtigen. Die Abplatzungen sind zum einen auf die im Beton vorhandene Feuchtigkeit zurückzuführen. Ab Temperaturen von 100°C kommt es zur Wasserdampfbildung, die Spannungen in der Betonmatrix hervorruft, wodurch großflächige Abplatzungen resultieren können. Wenn nämlich der Beton in einer bestimmten Tiefe des jeweiligen Bauteils genügend erwärmt ist, verdampft das freie und gebundene Wasser und erzeugt einen Porendruck. Der Wasserdampf wird durch den Porendruck sowohl zur Oberfläche des Bauteils als auch in dem Beton hineingedrängt, wo der Wasserdampf sich abkühlt und kondensiert. Mit zunehmender Erwärmung des Betons wandert die Verdampfungsfront in das Bauteil hinein. Durch die zunehmende Feuchte im Betoninnern wird der Porendruck im Bereich der Verdampfungsfront größer, was zu Abplatzungen führen kann. Ein hochfester Beton mit sehr dichtem Gefüge ist besonders gefährdet. Je nach Restfeuchte und Aufbau der Betonmatrix ist nicht auszuschließen, dass sich die Schadensfront mit fortschreitender Branddauer sehr weit in den Betonquerschnitt hineinfrisst. - Zum anderen sind aber auch lokale Spannungszustände im Innern des Betons für die Abplatzungen verantwortlich, die nicht auf den Wasserdampf bzw. Wasserdampfdruck zurückzuführen sind. Bei höheren Temperaturen kommt es bei verschiedenen Mineralien in den Betonzuschlägen zu chemischen Umsetzungen, die mit Wasser- und/oder Gasabspaltungen verbunden sind, so dass eine Volumenzunahme resultiert (beispielsweise Quarzumbildung bzw. Quarzsprung). - Außerdem können temperaturbedingte Eigen- und Zwängungsspannungen zusätzlich zu Abplatzungen führen. - Wenn der Beton den vorstehend erläuterten Mechanismen schutzlos ausgesetzt ist, kann sich die Schadensfront weit in das betreffende Bauteil hineinfressen. Dieser Abschäleffekt wird dadurch hervorgerufen, dass auf Grund der Abplatzungen immer neue Betonflächen freigelegt werden. Die resultierenden Schäden an der Tunnelauskleidung beeinträchtigen in der Regel die Tragfähigkeit der Tunnelauskleidung beachtlich und somit auch die Verfügbarkeit des Tunnels für den Verkehr. Die Sanierung der Tunnelauskleidung und der damit verbundene Betriebsausfall des Tunnels kann Wochen oder auch Monate dauern.

Es sind bereits Bauteile bekannt, die gegen Abplatzungen bei Brandbeanspruchung beständig sein sollen (DE 42 20 274 C2). Der Beton dieser Bauteile enthält eine bestimmte Menge Polyolefinfasern mit spezieller Fasergeometrie. Bei den hohen Temperaturen im Brandfall sollen diese Kunststofffasern schmelzen und im Beton Kapillare bilden, durch die der Wasserdampf abgeleitet werden kann. Dadurch soll vermieden werden, dass sich ein hoher Dampfdruck aufbaut, der Abplatzungen bewirken kann. Es hat sich aber gezeigt, dass mit diesen bekannten Maßnahmen Abplatzungen nur bis zu einem gewissen Ausmaß reduziert werden können. Mit anderen Worten treten bei den hohen Temperaturen im Brandfall nichtsdestoweniger noch störende Abplatzungen auf, die die Stabilität und Tragfähigkeit des jeweiligen Bauteils beachtlich beeinträchtigen.

Aus der Praxis ist es auch bekannt, zur Vermeidung der unmittelbaren Brandeinwirkung auf die Tunnelwandungen und der resultierenden Abplatzungen, die Tunnelwandungen mit zusätzlichen Brandschutzbekleidungen in Form von Brandschutzplatten oder Brandschutzputzen oder dergleichen zu versehen. Diese zusätzlichen Maßnahmen sind allerdings sehr aufwändig und kostspielig. Außerdem sind diese Brandschutzmaßnahmen mit beachtlichen Nachteilen verbunden. Zunächst wird die tragende Tunnelkonstruktion von den Brandschutzplatten oder Brandschutzputzen vollständig verkleidet und kann nicht mehr eingesehen werden. Visuelle Überprüfungen und Inspektionen der Tunnelinnenschalen, insbesondere im Fugenbereich sind also nicht mehr möglich. Sanierungsarbeiten bzw. Nachdichtarbeiten sind immer mit dem Rückbau und der Erneuerung der Brandschutzbekleidung verbunden. Befestigungselemente für Fahrdrahtbefestigungen, Beschilderungen, Tunnelleitsysteme usw. durchdringen die Brandschutzbekleidung, so dass für diese Bereiche aufwendige Sonderlösungen erforderlich sind. Die Brandschutzbekleidung muss fernerhin so ausgelegt werden, dass dynamische Einwirkungen aus dem Fahrbetrieb in Folge von Druck- und Sogwirkungen sicher aufgenommen werden.

Brandschutzbekleidungen in Form von Brandschutzplatten oder Brandschutzputzen haben weiterhin den beachtlichen Nachteil, dass sie bereits bei einer leichten Fahrzeugkollision erhebliche Zerstörungen erfahren können. Die nachfolgende Instandsetzung ist natürlich ebenfalls sehr aufwendig. Brandschutzplatten und Brandschutzputze müssen außerdem wirksam vor Feuchtigkeitseinwirkungen geschützt werden. Eine Feuchtigkeitsaufnahme führt bei den Brandschutzplatten zu einem höheren Gewicht und somit eventuell zu einer Beeinträchtigung der Plattenbefestigung. Durch Feuchtigkeitsaufnahme wird die Haftung von Brandschutzputzen verringert. Die Brandschutzbekleidungen müssen vor allem deshalb vor Feuchtigkeit geschützt werden, weil die Feuchtigkeitsaufnahme eine Verringerung der Wärmedämmwirkung im Brandfall zur Folge hat. Im Ergebnis bringen also zusätzliche Brandschutzmaßnahmen durch Brandschutzplatten, Brandschutzputze oder dergleichen erhebliche Nachteile mit sich.

Demgegenüber liegt der Erfindung das technische Problem zugrunde, ein Bauteil der eingangs genannten Art anzugeben, bei dem Abplatzungen im Brandfall ausgeschlossen oder zumindest weitgehend minimiert werden können und für das zusätzliche aufwendige Brandschutzmaßnahmen, wie Brandschutzplatten oder Brandschutzputze nicht erforderlich sind.

Zur Lösung dieses technischen Problems lehrt die Erfindung ein gegen Brandeinwirkung geschütztes Bauteil aus Beton, insbesondere Tübbings aus Beton für den Tunnelausbau,
wobei der Beton Kunststofffasern in einer Menge von 0,01 bis 12 kg/m³ enthält,
wobei die Faserlänge der Kunststofffasern kleiner als 5 mm ist
und wobei das Größtkorn des Betons im Bereich zwischen 8 und 13 mm liegt.

Der Erfindung liegt die Erkenntnis zugrunde, dass Abplatzungen im Brandfall effektiv vermieden werden können, wenn der Beton einerseits Kunststofffasern in der beanspruchten Menge enthält und wenn der Beton andererseits die erfindungsgemäße Größtkornbegrenzung aufweist. Grundsätzlich können beliebige Bauteile aus dem erfindungsgemäßen Beton hergestellt werden, die gegen Brandeinwirkung geschützt werden sollen. Besonders bewährt hat sich der erfindungsgemäße Beton jedoch für den unterirdischen Tunnelausbau. Insbesondere in der jüngeren Vergangenheit hat es sich gezeigt, dass bei einem Brandfall in einem Tunnel, beispielsweise als Folge eines Verkehrsunfalls, beachtliche Temperaturen entstehen, die Abplatzungen am Beton hervorrufen können, so dass die Tragfähigkeit des Tunnelausbaus erheblich beeinträchtigt werden kann. Dies kann natürlich zu verheerenden Katastrophen führen. Das gilt beispielsweise vor allem für einen Unterwassertunnel. Gegenstand der Erfindung ist daher insbesondere ein Tübbing aus dem erfindungsgemäßen Beton für den unterirdischen Tunnelausbau sowie ein unterirdischer Tunnelausbau aus diesen Tübbings. Bei einem Tunnelausbau aus den erfindungsgemäßen Tübbings sind zusätzliche Brandschutzmaßnahmen in Form von Brandschutzplatten oder Brandschutzputzen nicht mehr erforderlich. Somit werden auch die damit verbundenen eingangs beschriebenen Nachteile vermieden.

Dass erfindungsgemäß das Größtkorn des Betons im Bereich zwischen 8 und 13 mm liegt, meint vor allem auch, dass das Größtkorn des eingesetzten Zuschlagstoffes dieser Begrenzung unterliegt. - Die erfindungsgemäß zugesetzten Kunststofffasern sollen bei den hohen Temperaturen im Brandfall schmelzen und Kapillare bilden, so dass der entstehende Wasserdampf abgeführt werden kann und sich ein hoher Wasserdampfdruck nicht aufbauen kann. Es liegt im Rahmen der Erfindung, dass die Kunststofffasern in dem Beton möglichst gleichmäßig verteilt vorliegen.

Nach einer bevorzugten Ausführungsform der Erfindung sind Polyolefinfasern als Kunststofffasern in dem erfindungsgemäßen Beton enthalten. Vorzugsweisen werden Polypropylenfasern und/oder Polyethylenfasern als Kunststofffasern eingesetzt. Nach einer Ausführungsform der Erfindung enthält der erfindungsgemäße Beton Kunststofffasern aus zumindest einem Kunststoff der Gruppe "Polyolefin, Polyester, Polyamid, Polyvinylalkohol, Polyacrylnitril".

Nach sehr bevorzugter Ausführungsform, der im Rahmen der Erfindung besondere Bedeutung zukommt, enthält der Beton Kunststofffasern in einer Menge von 2 bis 5 kg/m³. - Vorzugsweise liegt das Verhältnis Faserlänge/Faserdurchmesser der Kunststofffasern im Bereich 50. bis 700, bevorzugt im Bereich 50 bis 350. Das Verhältnis Faserlänge/Faserdurchmesser kann beispielsweise im Bereich 250 bis 350 liegen. Faserdurchmesser meint hier den Außendurchmesser der Faser. Die Faserlänge der Kunststofffasern ist erfindungsgemäß kleiner als 5 mm und bevorzugt kleiner als 4 mm. Nach sehr bevorzugter Ausführungsform der Erfindung beträgt die Faserlänge 1 bis 3 mm. Der Faserdurchmesser der Kunststofffasern beträgt vorzugsweise 0,1 nm bis 1 mm, bevorzugt 50 nm bis 1 µm.

Nach einer bevorzugten Ausführungsform der Erfindung sind die Kunststofffasern als Hohlfasern ausgebildet. Es liegt somit im Rahmen der Erfindung, dass die Kunststofffasern über ihre Länge innen hohl ausgebildet sind. Der Innendurchmesser der Hohlfasern beträgt zweckmäßigerweise 8-16 µm, vorzugsweise 10 - 14 µm. Zweckmäßigerweise beträgt der Innendurchmesser der Hohlfasern 11 - 13 µm, beispielsweise 12 µm. Nach bevorzugter Ausführungsform weisen die Hohlfasern einen Außendurchmesser von 30 - 50 µm, vorzugsweise von 35 - 45 µm auf. Der Außendurchmesser der Hohlfasern beträgt beispielsweise 40 µm. Zweckmäßigerweise beträgt das Verhältnis Außendurchmesser/Innendurchmesser der Hohlfasern 2 - 4, vorzugsweise 2,5 - 3,5. Das Verhältnis Außendurchmesser/Innendurchmesser der Hohlfasern kann beispielsweise 3 betragen. Die Faserlänge der Holfasern ist kleiner als 5 mm. Nach einer Ausführungsform der Erfindung kann die Faserlänge der Hohlfasern im Bereich zwischen 1 und 3 mm liegen. Das Verhältnis Faserlänge/Faserdurchmesser der Hohlfasern liegt beispielsweise im Bereich von 50 - 60. Der Einsatz von Hohlfasern hat sich im Rahmen der Erfindung besonders bewährt.

Nach einer Ausfuhrungsform, der im Rahmen der Erfindung ganz besondere Bedeutung zukommt, liegt das Größtkorn des Betons im Bereich von 9 bis 13 mm, vorzugsweise im Bereich von 10 bis 12 mm. - Als Zuschlagstoffe für den erfindungsgemäßen Beton werden zweckmäßigerweise Kiese und/oder gebrochenes Korn eingesetzt.

Es liegt im Rahmen der Erfindung, dass die Kunststofffasern sehr gleichmäßig verteilt in dem erfindungsgemäßen Beton vorliegen. Hierzu wird zweckmäßigerweise der erfindungsgemäße Beton bzw. der Beton für das erfindungsgemäße Bauteil mit einem Fließmittel versetzt. Vorzugsweise enthält der Beton zumindest ein Sulfonat als Fließmittel. Es liegt dabei im Rahmen der Erfindung, dass zumindest ein Sulfonat aus der Gruppe "Ligninsulfonat, Melaminsulfonat, Naphthalinsulfonat" in dem Beton enthalten ist. Es liegt weiterhin im Rahmen der Erfindung, dass der erfindungsgemäße Beton ein Polycarboxylat und/oder einen Polycarboxylatether als Fließmittel enthält.

Vorzugsweise weist ein erfindungsgemäßes Bauteil aus Beton an seiner brandbeanspruchten Oberfläche eine zusätzliche Brandschutzbewehrung aus Stahl auf. Hierbei kann es sich nach einer Ausführungsform der Erfindung um eine zweilagige Stahlmattenbewehrung handeln. Es liegt auch im Rahmen der Erfindung, dass dem erfindungsgemäßen Beton Stahlfasern als Brandschutzbewehrung zugesetzt sind.

Nachfolgend werden bevorzugte Mengenanteile für die Herstellung eines erfindungsgemäßen Betons bzw. für die Herstellung eines erfindungsgemäßen Bauteils aus einem Beton angegeben: Zur Herstellung des erfindungsgemäßen Betons werden vorzugsweise 250 bis 500 kg/m³ Zement, bevorzugt 250 bis 470 kg/m³ Zement eingesetzt. Ein erfindungsgemäßer Beton kann beispielsweise 280 bis 380 kg/m³ Zement enthalten. Zweckmäßigerweise wird ein Zement gemäß DIN 1164 verwendet. Dem erfindungsgemäßen Beton werden vorzugsweise 2 bis 5 kg/m³ Kunststofffasern, bevorzugt 2 bis 4 kg/m³ Kunststofffasern zugesetzt. Bei der Herstellung des erfindungsgemäßen Betons werden zweckmäßigerweise 120 bis 230 kg/m³ Wasser, bevorzugt 140 bis 210 kg/m³ Wasser eingesetzt. Der erfindungsgemäße Beton kann beispielsweise mit 150 bis 200 kg/m³ Wasser hergestellt werden. Der Anteil der Zuschlagstoffe mit einem Größtkorn zwischen 8 und 15 mm liegt vorzugsweise im Bereich zwischen 800 und 1600 kg/m³. Dem erfindungsgemäßen Beton können beispielsweise 600 bis 1500 kg/m³, bevorzugt 700 bis 1200 kg/m³ dieser Zuschlagstoffe zugesetzt werden. Der erfindungsgemäße Beton enthält zweckmäßigerweise 550 bis 950 kg/m³ Sand beispielsweise 600 bis 700 kg/m³ Sand. Dem erfindungsgemäßen Beton werden vorzugsweise 2 bis 7 kg/m³ Fließmittel zugesetzt, bevorzugt 3 bis 6 kg/m³ Fließmittel. - Nachfolgend werden 2 Ausführungsbeispiele für die Basisrezeptur eines erfindungsgemäßen Betons angegeben.

### Ausführungsbeispiel 1:

| | |
|---|---|
| Zement (CEM I 52, 5) | 350 kg/m³ |
| Flugasche | 50 kg/m³ |
| Wasser | 170 kg/m³ |
| Kunststofffaser | 3 kg/m³ |
| Fließmittel | 4 kg/m³ |
| Sand | 630 kg/m³ |
| Weitere Zuschlagstoffe (mit erfindungsgemäßer Größtkornbegrenzung) | 1300 kg/m³ |

### Ausführungsbeispiel 2:

| | |
|---|---|
| Zement (CEM I 42,5) | 300 kg/m³ |
| Flugasche | 80 kg/m³ |
| Wasser | 165 kg/m³ |
| Kunststofffaser | 3 kg/m³ |
| Fließmittel | 5 kg/m³ |
| Sand | 700 kg/m³ |
| Weitere Zuschlagstoffe (mit erfindungsgemäßer Größtkornbegrenzung) | 1300 kg/m³ |

## Patentansprüche

1. Gegen Brandeinwirkung geschütztes Bauteil aus Beton, insbesondere Tübbing aus Beton für den Tunnelausbau,
wobei der Beton Kunststofffasern in einer Menge von 0,01 bis 12 kg/m³ enthält,
wobei die Faserlänge der Kunststofffasern kleiner als 5 mm ist
und wobei das Größtkorn des Betons im Bereich zwischen 8 und 13 mm liegt.

2. Bauteil nach Anspruch 1, wobei Polyolefinfasern als Kunststofffasern enthalten sind.

3. Bauteil nach einem der Ansprüche 1 oder 2, wobei der Beton Kunststofffasern in einer Menge von 2 bis 5 kg/m³ enthält.

4. Bauteil nach einem der Ansprüche 1 bis 3, wobei das Verhältnis Faserlänge/Faserdurchmesser der Kunststofffasern im Bereich 50 bis 700, vorzugsweise im Bereich 50 bis 350 liegt.

5. Bauteil nach einem der Anspruche 1 bis 4, wobei die Faserlänge kleiner als 4 mm ist.

6. Bauteil nach Anspruch 5, wobei die Faserlänge 1 bis 3 mm betragt.

7. Bauteil nach einem der Anspruche 1 bis 6, wobei die Kunststofffasern als Hohlfasern ausgebildet sind.

8. Bauteil nach Anspruch 7, wobei die Hohlfasern einen Innendurchmesser von 8 bis 16 µm, vorzugsweise 10 bis 14 µm aufweisen.

9. Bauteil nach einem der Anspruche 7 oder 8, wobei die Hohlfasern einen Außendurchmesser von 30 bis 50 µm, vorzugsweise von 35 bis 45 µm aufweisen.

10. Bauteil nach einem der Anspruche 7 bis 9, wobei das Verhältnis Außendurchmesser/Innendurchmesser der Hohlfasern 2 bis 4, vorzugsweise 2,5 bis 3,5 betragt.

11. Bauteil nach einem der Ansprüche 1 bis 10, wobei das Größtkorn des Betons im Bereich zwischen 9 bis 13 mm liegt.

12. Bauteil nach einem der Anspruche 1 bis 11, wobei der Beton zumindest ein Sulfonat als Fließmittel enthält.

13. Bauteil nach einem der Anspruche 1 bis 12, wobei der Beton ein Polycarboxylat und/oder einen Polycarboxylatether als Fließmittel enthält.

## Claims

1. Component made of concrete protected against the effects of fire, especially concrete tubbing for tunnel construction,
wherein the concrete contains plastic fibres in a quantity of 0.01 to 12 kg/m³,
wherein the fibre length of the plastic fibres is less than 5 mm,
and wherein the largest concrete grain lies in the range between 8 and 13 mm.

2. The component according to claim 1, wherein polyelofin fibres are contained as plastic fibres.

3. The component according to one of claims 1 or 2, wherein the concrete contains plastic fibres in a quantity of 2 to 5 kg/m³.

4. The component according to any one of claims 1 to 3, wherein the fibre length/fibre diameter ratio of the plastic fibres lies in the range of 50 to 700, preferably in the range of 50 to 350.

5. The component according to any one of claims 1 to 4, wherein the fibre length is shorter than 4 mm.

6. The component according to claim 5, wherein the fibre length is 1 to 3 mm.

7. The component according to any one of claims 1 to 6, wherein the plastic fibres are constructed as hollow fibres.

8. The component according to claim 7, wherein the hollow fibres have an inside diameter of 8 to 16 µm, preferably 10 to 14 µm.

9. The component according to any one of claims 7 or 8, wherein the hollow fibres have an outside diameter of 30 to 50 µm, preferably 35 to 45 µm.

10. The component according to any one of claims 7 to 9, wherein the outside diameter/inside diameter ratio of the hollow fibres is 2 to 4, preferably 2.5 to 3.5.

11. The component according to any one of claims 1 to 10, wherein the largest concrete grain lies in the range between 9 and 13 mm.

12. The component according to any one of claims 1 to 11, wherein the concrete contains at least one sulphonate as a fluxing agent.

13. The component according to any one of claims 1 to 12, wherein the concrete contains a polycarboxylate and/or a polycarboxylate ether as fluxing agent.

## Revendications

1. Elément de construction en béton, en particulier segment de cuvelage en béton pour les tunnels
**caractérisé en ce que**
- le béton comporte des fibres synthétiques de masse volumique comprise entre 0,01 et 12 kg/m³ ;
- la longueur des fibres synthétiques est inférieure à 5 mm ;
- la dimension des grains de béton est comprise entre 8 et 13 mm.

2. Elément de construction selon la revendication 1, pour lequel les fibres synthétiques sont des fibres en polyoléfine.

3. Elément de construction selon la revendication 1 ou 2, pour lequel le béton comporte des fibres synthétiques de masse volumique comprise entre 2 et 5 kg/m³.

4. Elément de construction selon les revendications 1 à 3, pour lequel le rapport longueur/diamètre des fibres synthétiques est compris entre 50 et 700, de préférence entre 50 et 350.

5. Elément de construction selon l'une quelconque des revendications 1 à 4, pour lequel la longueur des fibres est inférieure à 4 mm.

6. Elément de construction selon la revendication 5, pour lequel la largeur des fibres est comprise entre 1 et 3 mm.

7. Elément de construction selon l'une quelconque des revendications 1 à 6, pour lequel les fibres synthétiques sont des fibres creuses.

8. Elément de construction selon la revendication 7, pour lequel les fibres creuses ont un diamètre interne compris entre 8 et 16 µm, de préférence entre 10 et 14 µm.

9. Elément de construction selon l'une quelconque des revendications 7 ou 8, pour lequel les fibres creuses ont un diamètre externe compris 30 et 50 µm, de préférence, entre 35 et 45 µm.

10. Elément de construction selon l'une quelconque des revendications 7 à 9, pour lequel le rapport diamètre externe/diamètre interne des fibres creuses est compris entre 2 et 4, de préférence entre 2,5 et 3,5.

11. Elément de construction selon l'une quelconque des revendications 1 à 10, pour lequel la taille des grains du béton est comprise entre 9 et 13 mm.

12. Elément de construction selon l'une quelconque des revendication 1 à 11, pour lequel le béton comporte, pour solvant, au moins un sulfonate.

13. Elément de construction, selon l'une quelconque des revendications 1 à 12, pour lequel le béton comporte, pour solvant, un polycarboxylate et/ou un éther polycarboxylate.
